# EUROPEAN PATENT APPLICATION

(11) **EP 4 751 841 A2**
(43) Date of publication of application: **03.06.2026**
(21) Application number: 25218962.6
(22) Date of filing: 27.11.2025
(51) Int. Cl.: B23Q 1/03, B23Q 1/00

(54) **A MACHINE FOR MACHINING A WOODEN PART AND A METHOD FOR CONFIGURING A MACHINE**

(30) Priority: 28.11.2024 IT 202400026934
(71) Applicant: SCM Group S.p.A., 47921 Rimini (RN) (IT)
(72) Inventor: FERRI, Fabio, 47921 Rimini (RN) (IT); FABBRI, Fabio, 47921 Rimini (RN) (IT); VALENTINI, Luciano, 47921 Rimini (RN) (IT)
(74) Representative: Gallo, Gianluca

(57) **Abstract**

This invention relates to a machine (1) for machining a wooden part, or the like, comprising: a work table (2); a locking device (3), configured to be coupled to, and uncoupled from the work table (2) and to support and hold the part in place; and a machining unit (4), configured to machine the part; wherein the work table (2) comprises a main interface (21), the main interface (21) being configured to exchange energy and/or a signal, wherein the locking device (3) comprises a secondary interface (31), configured to exchange energy and/or a signal, and wherein the main interface (21) is configured to connect to the secondary interface (31) when the locking device (3) is coupled to the work table at the main interface (21), and is configured to disconnect from the secondary interface (31) when the locking device (3) is uncoupled from the work table (2). This invention also relates to a method for configuring a machine (1) for machining a wooden part.

## Description

This invention relates to a machine for machining a part, in particular a wooden part or the like, such as, for example, a part made of plastic, metal, or a composite.

This invention also relates to method for configuring a machine, in particular a machine for machining a part, in particular a wooden part or the like, such as, for example, a part made of plastic, metal, composite wood or like material.

Known in the field of machines for machining wooden parts are numerical control machines (Computer Numerical Control, CNC), typically called machining centres, or MCs for short, used for machining wooden panels and/or parts made of solid wood, or the like. Hereinafter generic reference is made to workpieces, or parts, to mean both panels and solid wood parts. As is well known, a MC for machining a part may comprise one or more locking devices, such as suction cups or clamps, whose purpose is respectively to support and hold in place a panel to be machined or a sold wood part to be machined.

The suction cups are typically used in the machining of panels, that is to say, of parts having two dimensions (length and width) which are predominant with respect to a third dimension (thickness). The panel is held in place on one or more suction cups by generating a negative pressure between the suction cups and the panel to be held. The negative pressure generates a gripping force.

When machining solid wood, for example, wooden "squares", i.e. oblong elements with rectangular cross section, one or more grippers or clamps are typically used to support and hold the part to be machined. The solid wood part is held tightly in place between two jaws.

The locking devices are coupled, fixedly or removably, to a work table which defines a working area oriented according to a working plane. The working plane is typically parallel to the supporting surface of the MC and may extend along a longitudinal axis and a transverse axis perpendicular to the longitudinal axis.

The work table of the MC may comprise, for example, a plurality of bars (forming what is known as a barred work table, or barred table for short), which may extend, for example, along the transverse axis. The bars may also be disposed, for example, alongside each other. Furthermore, the bars may be disposed parallel to each other. In particular, the bars may, for example, be movable, either manually or automatically, along the longitudinal axis. Each bar of the barred table may comprise a plurality of locking devices, in particular a plurality of suction cups and/or clamps, for supporting and holding the workpiece in place.

The locking devices may be coupled to each bar removably, for example. Furthermore, the locking devices may be movable relative to the bar they are coupled to, either manually or automatically, along the transverse axis and/or along a vertical axis perpendicular to the working plane.

Moving the bars along the longitudinal axis and moving the locking devices along the transverse axis makes it possible to dispose the locking devices in the working area so as to adapt to the size of one or more panels to be machined.

The working area has an operator side, oriented longitudinally and facing an operator zone. The operator zone is the zone from which the operator typically controls the MC, for example using a control desk located in the operator zone. Typically, for safety reasons, the MC has only one operator side, which is the side that is directly accessible to the operator working in the operator zone, for example for panel loading and unloading operations. Typically, a MC may comprise a machining unit configured to support and move a machining tool on the working area. In particular, the machining unit may comprise a spindle, to which the machining tool may be coupled, for example removably. The spindle is thus configured to support and set the tool in rotation. The machining tool, rotating on the spindle (for example, an electrospindle) can machine the panel by stock removal.

Typically, through the machining unit, the tool may be movable relative to the working area, for example along three Cartesian axes, in particular, the longitudinal axis, the transverse axis and a vertical axis orthogonal to the longitudinal and transverse axes. In particular, the vertical axis may be perpendicular to the working plane. Furthermore, the tool may be movable relative to the working plane according to one or more rotary axes: for example, two rotary axes typically called B and C.

The locking devices need power to be able to hold the workpiece in place. For example, the suction cups need to be fluid dynamically connected to a negative pressure line to be able to produce suction between the suction cup and the panel, so that the panel can be held in place on the suction cup. Furthermore, the clamps, for example, need a supply of compressed air or electric power so as to be able to move the jaws to tighten and hold the workpiece in place.

The locking devices also need to exchange information (i.e. send and/or receive information) in the form of signals. The exchange may be between a control device, mounted in the MC or remote (external PC, server, cloud, smart device, etc) and the locking device. For example, the exchange may be between a numerical control of the MC and the locking device. The exchange may be unidirectional: from the control device to the locking device, or vice versa. Furthermore, the exchange may be bidirectional, between the control device and the locking device. The exchange of signals may be necessary to control the different operations of the locking device such as, for example, locking or releasing the workpiece, opening the jaws of a clamp, switching the vacuum between the suction cup and the panel on and off (for example, in the case where there is a vacuum pump inside the suction cup itself). Moreover, if the control device is provided with sensors, the exchange of signals may be necessary, for example, to transmit the quantities detected by the sensors to the control device, to a computer, to a display unit, to a server or to a smart device, for example. Furthermore, the exchange of signals may be used to identify the type of locking device such as, for example, a suction cup, a clamp or a stop, to read data identifying the locking device such as, for example, a unique identification code, a MAC ADDRESS, or to read configuration data of the locking device such as, for example, a data relating to correct locking to the work table, orientation of the assembly device on the work table or a position of the assembly device on the work table.

If the locking devices are coupled fixedly to the work table, the exchange of energy and/or signals is between cables and/or tubes and respective connectors, connected permanently to the locking device.

By "permanent" is meant that when the machine is operating normally, the connectors are not unplugged and the connection remains stable, whereas, under certain circumstances, such as, for example, machine assembly, configuration or maintenance, the connectors may obviously be unplugged and the connection interrupted.

On the contrary, for locking devices which are removably coupled to the work table, the exchange of energy and/or signals is again between cables or tubes and respective connectors. However, each time an operator couples (i.e. mounts) a locking device to the work table, the selfsame operator must necessarily also plug in the respective connectors to connect the cables or tubes to the locking device and, vice versa when the operator uncouples (i.e. removes) the locking device from the work table.

It is evident that plugging and unplugging the connectors to make the connection between the cables or tubes and the locking device to allow energy and/or signals to be exchanged are particularly onerous and complex operations which the operator is required ton perform.

These operations are even more onerous when configuring the machine for a certain process means coupling and uncoupling different locking devices to the work table.

Furthermore, in order to plug and unplug the connectors, the operator may have to lean forward into the work table zone of the machine, putting safety at risk.

The aim of this disclosure is to provide a machine for machining a part, and method for configuring a machine, to overcome the above mentioned disadvantages of the prior art.

In particular, the aim of this disclosure is to provide a machine for machining a part, and a method for configuring a machine, where the operations for configuring the machine are simple, undemanding and safe for an operator. Another aim of this disclosure is to provide a machine for machining a part, and a method for configuring a machine, which make the machine robust and safe against external agents such as dust and dirt.

This aim is fully achieved by the machine for machining a part, and the method for configuring a machine according to this disclosure as characterized in the appended claims.

This disclosure provides a machine for machining a wooden part, or the like. The machine comprises a work table. The machine also comprises a locking device, in particular, one or more locking devices.

In this disclosure, reference is made mainly to one locking device, since the features relating to one locking device are applicable to all the locking device of the machine, and it is therefore understood that the scope of protection afforded by the invention described herein, as defined in the appended claims, also includes the case where the machine comprises a plurality of locking devices.

The locking device is configured to be coupled to the work table and to be uncoupled from the work table. The locking device is configured to support and hold a part in place, in particular, a part to be machined. The machine also comprises a machining unit, configured to machine the part, in particular, when the part is supported and held in place by one or more locking devices.

The work table comprises one or more main interfaces.

In this disclosure, reference is made mainly to one main interface, since the features relating to the main interface are applicable to all the main interfaces of the work table, and it is therefore understood that the scope of protection afforded by the invention described herein, as defined in the appended claims, also includes the case where the machine comprises a plurality of main interfaces.

The main interface is configured to exchange energy or a signals, or energy and a signal. The main interface may exchange one or more types of energy (individually or simultaneously) such as, for example, electrical energy, energy in the form of positive or negative pressure, or energy in the form of heat. Furthermore, the main interface may exchange one or more types of signals (individually or simultaneously) such as, for example, electrical, optical, fluid dynamic, or electromagnetic signals. The main interface may comprise, for example, a main connector to make a connection to be able to exchange energy and/or a signal. The main connector may be, for example, a contact connector. The contact connector may comprise, for example, a plug-in connector (male-female, for example), sliding contacts, or pins. The main connector may be, for example, a contactless connector, such as, for example, an optical connector. The main interface may comprise a main connector having a contact portion and a contactless portion.

The locking device comprises a secondary interface. The secondary interface is configured to exchange energy or a signal, or energy and a signal. The secondary interface may exchange one or more types of energy (individually or simultaneously) such as, for example, electrical energy, energy in the form of positive or negative pressure, or energy in the form of heat. Furthermore, the secondary interface may exchange one or more types of signals (individually or simultaneously) such as, for example, electrical, optical, fluid dynamic, or electromagnetic signals. The secondary interface may comprise, for example, a secondary connector to make a connection to be able to exchange energy and/or a signal. The secondary connector may be, for example, a contact connector. The contact connector may comprise, for example, a plug-in connector (male-female, for example), sliding contacts, or pins. The secondary connector may be, for example, a contactless connector, such as, for example, an optical connector. The secondary interface may comprise a secondary connector having a contact portion and a contactless portion.

The main interface is configured to connect to the secondary interface. The connection between the main interface and the secondary interface allows exchanging energy and/or signals. The connection may be made by coupling a main connector of the main interface and a secondary connector of the secondary interface to each other. The main connector and the secondary connector must obviously be configured to be coupled to each other correctly.

In particular, the main interface is configured to connect to the secondary interface when the locking device is coupled to the work table at the main interface, and is configured to disconnect from the secondary interface when the locking device is uncoupled from the work table at the main interface. The connection between the main interface and the secondary interface is made during the step of coupling the locking device to the work table.

Advantageously, the connection and disconnection may be automatic, i.e. without any direct action by an operator. In effect, connection and disconnection may be the direct result of the action of coupling the locking device to, and uncoupling it from, the work table.

Advantageously, the work table may define a working area. In this case, the main interface may be movable inside the working area. The working area may be oriented along a working plane. The working plane is typically parallel to the supporting surface of the machine and may extend along a longitudinal axis and a transverse axis perpendicular to the longitudinal axis. In particular, the main interface may be movable along the transverse axis and/or the longitudinal axis and/or along a vertical axis perpendicular to the working plane. That way, since the interface can be placed at a desired position in the working area, the machine is more flexible. In effect, the position of the main interface determines the position of the locking device, which in turn determines the point where the part to be machined is supported and held in place. Thus, being able to move the interface in the working area makes it possible to determine where the part to be machined needs to be supported and held in place, making the machine more flexible and adaptable. Positioning the main interface in the working area may be done manually (i.e. the action of the operator is necessary), semi-manually (i.e. the operator is assisted in positioning) or fully automatically (i.e. the action of the operator is not necessary).

More advantageously, the work table may comprise an actuator which is coupled to the main interface in order to move it within the working area. The table may also comprise a guide system to guide the main interface as it moves. The actuator may be, for example, an electric actuator (e.g. an electric motor, an electric servomotor, a brushless motor, a synchronous motor) or a pneumatic actuator (e.g. a piston). The machine may also comprise a controller, connected to the actuator to control it. That way, the main interface can be moved automatically, in particular along the transverse axis and/or the longitudinal axis. That way, the machine is more efficient and reliable, reducing the risk of incorrect positioning by the operator.

Advantageously, the main interface may comprise a cover. The cover may be configured to isolate the main interface from the outside environment. In particular, the purpose of the cover may be to protect the main interface against dirt such as, for example, the shavings produced during machining, dust, splashes of oil or water. That way, the machine is more robust against dirt. In effect, without the cover, deposits of dirt and grime could form on the main interface, impairing the coupling, hence the connection, to the secondary interface, with the risk of machine malfunctions. Advantageously, the cover may be movable between a closed position, where it isolates the main interface from the outside environment, and an open position, where it does not isolate the main interface from the outside environment. The open position may also allow the main interface and the secondary interface to be coupled, hence connected, to each other. The closed position, on the other hand, may prevent the main interface and the secondary interface from being coupled, hence connected, to each other. That way, it is easier to make a cover which not only allows isolating the main interface from the outside environment but, when necessary, also allows coupling the main interface and the secondary interface to each other.

More advantageously, the cover may pass from the closed position to the open position automatically during coupling of the locking device to the work table at the main interface, and passes from the open position to the closed position automatically during uncoupling of the locking device from the work table at the main interface. This may be done, for example, by means of a mechanical system (e.g. a system of levers or a crank mechanism) which is activated during the step of coupling the locking device to the work table. The mechanical system acts on the cover, opening and closing it automatically. Alternatively, an actuator, such as, for example, a piston or an electric motor, may be used to operate on the cover so as to open and close it, automatically in this case too. Automating the opening and closing of the cover makes using the machine easier for the operator, who therefore does not need to worry about doing the operation. Moreover, the machine is made more reliable and robust because, if the operator were to forget to close the cover after uncoupling the locking device from the work table, the main interface would be soiled by dust and shavings. In other words, forgetting to close the cover nullifies all the advantages of cover itself.

Advantageously, the work table comprises one or more bars. Each bar may extend, for example, along the transverse axis. Furthermore, each bar may be movable, for example, along the longitudinal axis, perpendicular to the transverse axis. In this case, one or more main interfaces may be coupled movably to the bar. For example, each main interface may be movable along the transverse axis. The locking device is also configured to be coupled to, and uncoupled from, the bar at one of the main interfaces coupled to the bar, so as to connect the main interface to the secondary interface when the locking device is coupled to the bar and to disconnect the main interface from the secondary interface when the locking device is uncoupled from the bar. A work table comprising one or more bars makes it much easier to position one or more main interfaces in the working area. More advantageously, the bars may each comprise one or more bases. The bases may be movable along the transverse axis. Each base may comprise a respective main interface. In particular, the locking device may be configured to be coupled to the base and uncoupled from the base. Advantageously, the main interface is positioned in the base in such a way that when the locking device is coupled to the base, the main interface coupled to the secondary interface. In effect, the base may comprise first coupling means and the locking device may comprises second coupling means, the first and second coupling means being configured to be coupled to each other. The first and second coupling means may determine the relative position and/or the orientation between the base and the locking device. It is therefore possible to determine a position of the main interface in the base which, advantageously, makes the coupling between the main interface and the secondary interface easier and more secure when the locking device is coupled to the base. It is also possible to determine a position of the secondary interface in the base which, advantageously, makes the coupling between the main interface and the secondary interface easier and more secure.

Advantageously, the main interface may be configured to connect to the secondary interface, to exchange energy and/or a signal, through a mechanical and/or optical and/or electromagnetic and/or fluid-dynamic and/or contactless and/or wireless connection. Additionally, the secondary interface may be configured to connect to the main interface, to exchange energy and/or a signal, through a mechanical and/or optical and/or electromagnetic and/or fluid-dynamic and/or contactless and/or wireless connection.

More advantageously, the locking device may perform operations on the part and/or change configuration, using the energy exchanged through the connection between the main interface and the secondary interface. The operations on the part may be, for example, locking the part, releasing the part, moving the part. The configurations may be, for example, for locking the part, for releasing the part, for retractability (to reduce overall dimensions, for working (in which it is ready to support and lock the part). Advantageously, the locking device comprises a sensor for detecting at least one quantity relating to the machining of the part and/or the operating state of the locking device and/or the operating state of the machine, and the quantity detected is exchanged through the connection between the main interface and the secondary interface.

This disclosure provides a method for configuring a machine for machining a wooden part, or the like. The machine may comprise a work table. The work table may comprise a main interface configured to exchange energy and/or a signal. The machine also comprises a locking device, configured to be coupled to, and uncoupled from the work table and to support and hold the part in place. Additionally, the machine may comprise a machining unit which is configured to machine the part.

Advantageously, the method may comprise the step of coupling the locking device to the work table at the main interface. Furthermore, the method may comprise the step of connecting the main interface to the secondary interface to exchange energy and/or a signal during the step of coupling the locking device to the work table. The method may also comprise the step of uncoupling the locking device to the work table from the main interface. In particular, the method may comprise the step of disconnecting the main interface to the secondary interface to exchange energy and/or a signal during the step of uncoupling the locking device from the work table. More advantageously, the method may comprise the step, before coupling the locking device, of positioning the main interface at an assembling position in a working area defined by the work table. The assembling position may be an advantageous position for mounting or coupling the locking device to the work table.

Still more advantageously, the method may comprise the step, before uncoupling the locking device, of positioning the main interface at a disassembling position inside the working area. The disassembling position may be an advantageous position for removing or uncoupling the locking device from the work table.

Advantageously, the assembling and disassembling positions may be close to an operator side. The working area may have an operator side which is oriented, for example, along the longitudinal axis and which faces an operator zone. The operator zone is the zone from which the operator typically controls the MC, for example using a control desk located in the operator zone. Therefore, it is very easy for the operator to reach the operator side to assemble or disassemble the locking device without, for example, leaning forward over the machine. This makes the machine configuring operations particularly easy and safe for the operator.

This and other features are more apparent in the following description of a preferred embodiment, illustrated purely by way of non-limiting example in the accompanying drawings, in which:
- Figure 1 shows a perspective view of a machine for machining a part according to the invention;
- Figure 2 shows a perspective view of a detail of the machine according to the invention, in a first configuration;
- Figure 3 shows a perspective view of a detail of the machine according to the invention, in a second configuration;
- Figure 4 shows a perspective view of the detail of the machine according to the invention, in a third configuration;
- Figure 5 shows a perspective view of the detail of the machine according to the invention, in a third configuration; and
- Figure 6 shows a side view of the detail of the machine according to the invention, in the first configuration.

Hereinafter in this disclosure, directional terms such as "right", "left", "front", "rear", "top", "bottom", "upper", "lower", "lateral" etc. are used with reference to the accompanying drawings. Since components and/or elements and/or embodiments of this invention may be positioned and/or operated in several different orientations, the directional terms are used solely by way of non-limiting example.

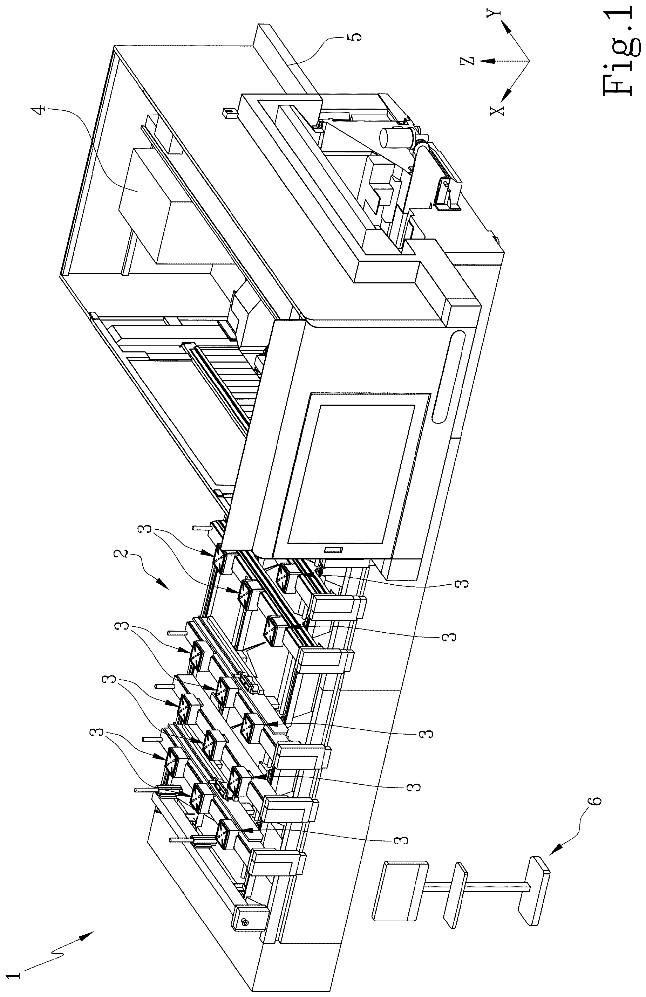

Figure 1 shows a machine 1 for machining a wooden part or the like. In particular, the machine is a machining centre, or MC for short.

The machine 1 comprises a bed. The bed rests on a substantially flat floor. The bed supports a work table 2. The work table 2 defines a working area oriented along a working plane substantially parallel to the floor on which the machine 1 rests. The working plane extends along a longitudinal axis X and a transverse axis Y perpendicular to the longitudinal axis.

The machine comprises a machining unit 4. The machining unit 4 is surrounded by a safety panel 5. The machining unit 4 and the safety panel 5 are movable along the longitudinal axis X. The machining unit 4 is movable also along the transverse axis Y and along a vertical axis Z perpendicular to the longitudinal axis Z and to the transverse axis Y. The vertical axis Z is therefore perpendicular to the working plane. The machining unit 4 comprises am spindle, configured to hold a tool and set the tool in rotation. The tool is coupled to the spindle removably so that the machine 1 an change the type of tool to perform different machining operations on the part. The tool is therefore movable relative to the work table 2 at least along the longitudinal axis X, the transverse axis Y and the vertical axis Z. The machining unit 4 may be configured to move the tool relative to the work table 2 in rotation, for example, about a first rotation axis and/or about a second rotation axis.

The machine 1 may comprise a control desk 6, configured to allow an operator to control the machine 1. The control desk 6 is positioned in an operator zone. The operator zone is the zone from which an operator typically controls the machine 1. The work table 2 has an operator side. The operator side is the side which is designed to be directly accessible to the operator working in the operator zone, for example, to load and unload the parts to be machined and to perform machine configuring operations such as, for example, setting the work table 2. With reference in particular to the example shown in Figure 1, the operator side is the longitudinal side facing the operator zone where the control desk 6 is located.

Again with reference to the example of Figure 1, the work table 2 comprises one or more bars 20, in particular a plurality of bars 20. The bars 20 extend along the transverse axis Y. The bars 20 are positioned side by side and parallel to each other. The bars 20 may be movable, either manually, or automatically by means of respective actuators, along the longitudinal axis X, so that their position inside the working area can be adjusted. Furthermore, the machine also comprises one or more locking devices 3, in particular a plurality of locking devices 3. The locking devices 3 are configured to be coupled to the work table 2, in particular to the bars 20. The locking devices 3 are configured to support and hold in place the part to be machined. In particular, the locking devices 3 are configured to support and hold in place the part to be machined, for example on the work table 2 and inside the working area.

To perform a certain machining process on a certain part, the machine 1 must be configured by the operator. Configuring the machine 1 involves choosing: the type of locking device 3 to be coupled to the work table 2 - for example, suction cups or clamps - depending on the type of part to be machined; the number of locking devices 3 to be coupled to the work table 2, for example according to the size of the part to be supported and held in place; and the position of the locking devices 3 in the working area so that they do not interfere with the tool. With reference in particular to the example show in Figure 1, the locking devices 3 are suction cups.

Described hereunder are the technical features of the bars 20 with reference, for brevity, to a single bar 20. It is evident that the features described with reference to a single bar 20 must be understood as being applicable to all the bars 20 present in the work table 2.

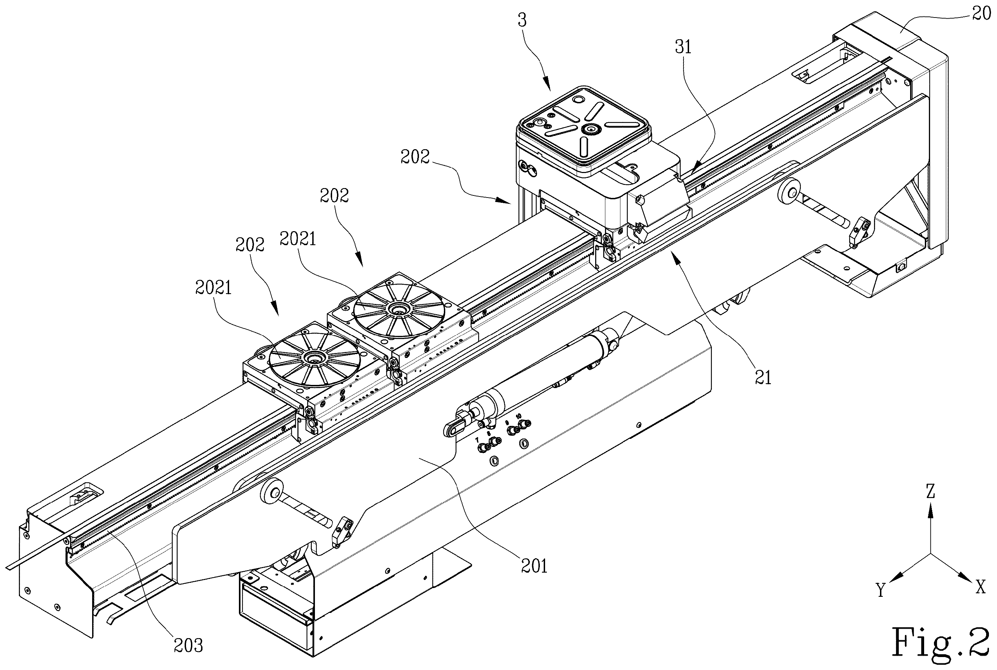

Figure 2 shows an example of a detail of the machine 1 in a first configuration, i.e. a bar and a locking device 3 coupled the bar 20.

The bar 20 may comprise a raiser 201, movable between a lowered position, where it is disposed below the working plane, and a raised position, where it is positioned at a level above the working plane. At the raised position, the raiser 201 is configured to support the part in such a way as to make it easier for the user to load the part.

Again with reference to the example shown in Figure 2, the bar 20 may comprise one or more bases 202, in particular a plurality of bases 202. Each base 202 may be movable along the transverse axis Y in either manual mode or automatic mode. For example, the bar 20 may comprise a rack 203 extending along the transverse axis Y, and each base 202 may comprise a respective actuating system such as, for example, a motor and a pinion. Such an actuating system allows the bases 202 to move along the transverse axis Y automatically and independently.

Each base may comprise first coupling means 2021. The first coupling means 2021 are configured to allow coupling a locking device 3 and the bar 20 to each other.

Furthermore, one or more bases, or all the bases, may comprise a main interface 21. The main interface 21 is configured to transmit energy and/or a signal.

Again with reference in particular to the example show in Figure 2, the operator may couple one or more locking devices 3 to a bar 20, in particular to a respective base 202. Figure 2 shows a locking device 3 coupled to a base 202. The locking device 3 may comprise second coupling means (not show in the illustration) configured to be coupled to the first coupling means 2021 of a base 202. The coupling may be such as to determine the relative position and orientation between the locking device 3 and the bar 20, in particular between the locking device 3 and the base 202. More specifically, the first and second coupling means may be configured to determine the relative position and orientation between the locking device 3 and the base 202. The locking device 3 comprises a secondary interface 31 configured to exchange energy and/or a signal. In particular, the secondary interface 31 is configured to be connected to the main interface 21 in such a way that there is an exchange of energy and/or a signal with the locking device 3. The main interface 21, too, is configured to be connected to the secondary interface 31 in such a way that there is an exchange of energy and/or a signal with the locking device 3. For example, the position of the main interface 21 in the base and the position of the secondary interface 31 in the locking device 3 are such that, when the locking device 3 is coupled to the base 202, the main interface 21 and the secondary interface 31 are face to face and close to each other so as to make connecting them easy and automatic, as shown in the example of Figure 2.

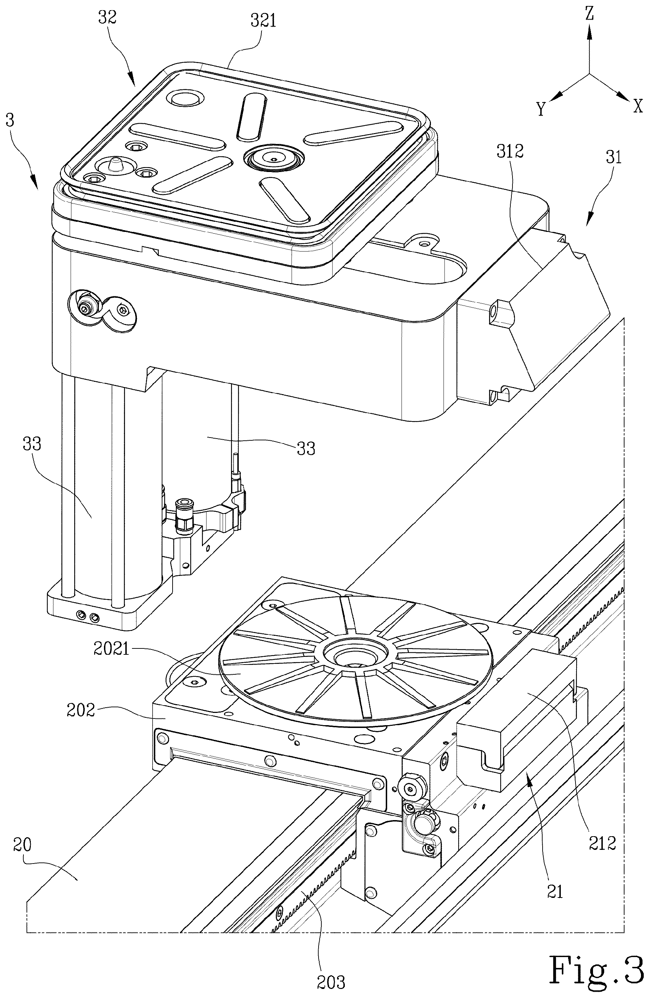

As shown in the example of Figure 3, the locking device 3 which, in this specific case, is a suction cup, has a supporting surface 32 for the part and a gasket 321. The gasket 321 serves to seal the zone between the supporting surface 32 and the part when the latter is rested on the selfsame supporting surface 32. In this configuration, when the suction (i.e. the negative pressure) is activated in the zone sealed in this way a force is created which holds the part on the suction cup 3. The suction cup 3 also comprises two pistons 33 which, when activated by compressed air, allow the suction cup 3 to be adjusted in height, that is to say, allow the supporting surface 32 to move along the vertical axis Z.

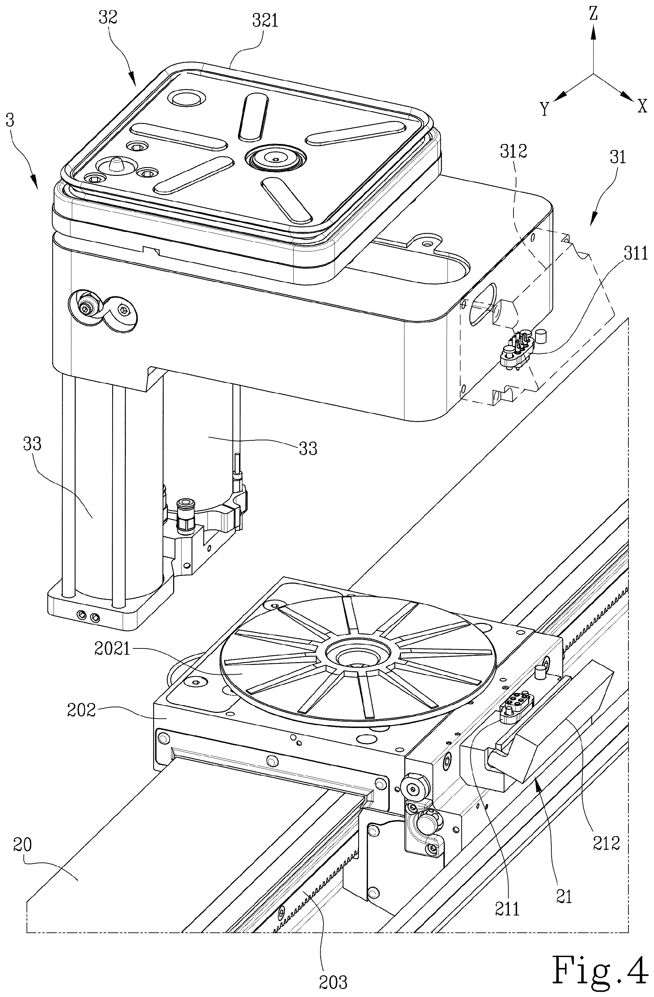

The main interface 21 may comprise a connector 211 (shown in Figure 4) and a cover 212. The main connector 211 is configured to be able to exchange energy and/or a signal. The cover 212 is configured to isolate the main connector 212 from an outside environment so it does not come into contact with dust or dirt. As shown in the example in Figure 3, the cover 212 is shaped to completely surround the main connector 212 so as to isolate it from the outside environment. As shown in the example in Figures 3 and 4, the cover is movable between a closed position (Figure 3), where it surrounds the main connector 211 and isolates it from the outside environment, and an open position (Figure 4), where it does not surround the main connector 211 and does not isolate it from the outside environment.

The secondary interface 31 may comprise a secondary connector 311 (shown in Figure 4) and a guard 312. The secondary connector 311 is configured to be able to exchange energy and/or a signal. In particular, the connector 311 is configured to connect to the main connector 211 so as to exchange energy and/or a signal with the locking device 3. The guard 312 is configured to partly hide the secondary connector 311.

Figure 3 shows a detail of the machine 1 in a second configuration, i.e. a portion of bar 20 and a locking device 3 suspended at the base 202, in particular at the main interface 21. In particular, the locking device 3 is positioned and oriented so as to be coupled to the base 202; the main interface 21 and the secondary interface 31 are face to face; and the cover 211 is at the closed position. Figure 4 shows a detail of the machine 1 in a third configuration. The third configuration is the same as the second configuration, except that the cover 211 is at the open position.

Again with reference to the example shown in Figure 4, the main connector 211 may be a contact or contactless connector (or a hybrid of the two) depending on the type of energy and the type of signal to be exchanged. In particular, Figure 4 shows a female plug-in connector 211, i.e. a connector having one or more electrical contacts configured to be coupled to the pins of a male plug-in connector.

In Figure 4, the guard 312 is rendered as transparent and shown by a dashed line so as to make the secondary connector 311 visible. The secondary connector 311 may be a contact or contactless connector (or a hybrid of the two) depending on the type of energy and the type of signal to be exchanged. In the example shown here, in order to enable the main connector 211 and the secondary connector 311 to be connected to each other, the secondary connector 311 is a male plug-in connector, i.e. a connector having one or more electrical contacts, in particular pins, configured to be coupled to the female plug-in connector.

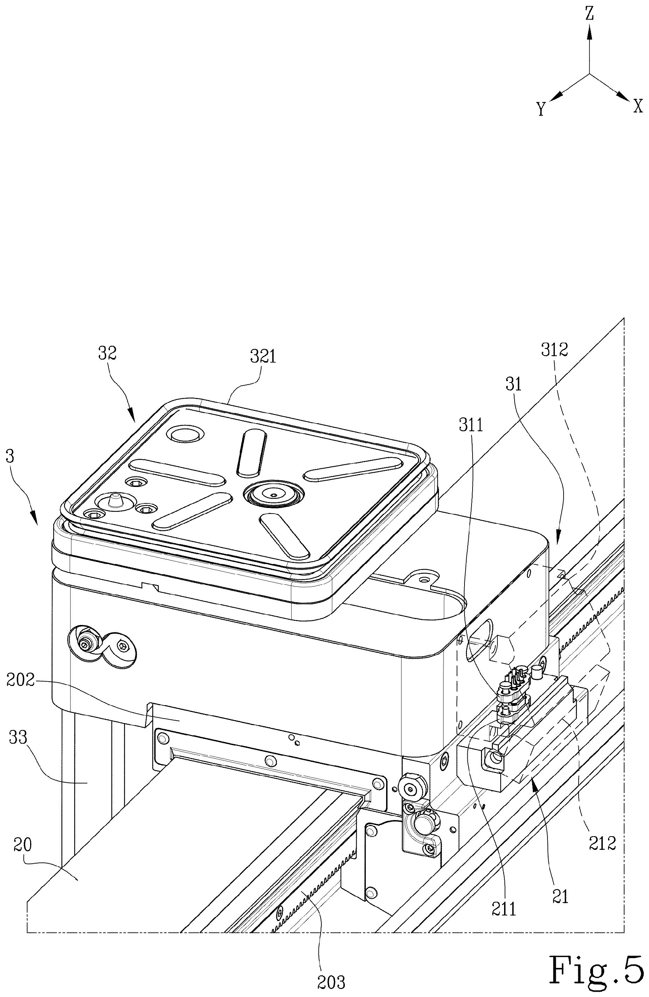

Figure 5 dhows a detail of he machine 1 in the first configuration. i.e. a portion of bar 20 in which the locking device 3 is coupled to the base 202, the main interface 21 is connected to the secondary interface 31 and, in particular, the main connector 211 is connected to the secondary connector 311 so as to be able to exchange energy and/or a signal with the locking device 3.

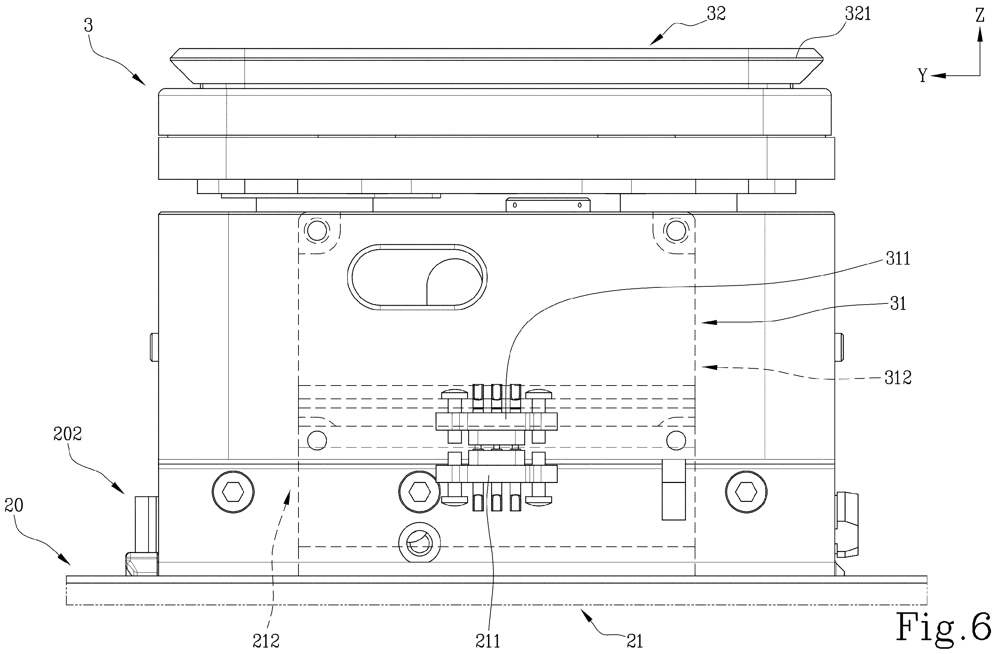

Figure 5, like Figure 6, which shows a side view of the detail of Figure 5, the guard 312 and the cover 212 are rendered as transparent and shown by dashed lines to make the connection between the main connector 211 and the secondary connector 311 visible.

Provided below is an explanation of how the machine 1 according to the invention works.

When the operator needs to configure the machine 1 to perform a certain machining process on a part, the work table 2 must be fitted with one or more locking devices 3.

The main interface 21, and in particular, the respective base 202, to b connected to the secondary interface 31 of the locking device 3, may be positioned, either by the operator or automatically, in a zone close to the operator side to facilitate the subsequent assembling operations, or steps. This step is optional.

The operator takes a locking device 3 necessary for that specific machining process, such as, for example, a suction cup.

The operator moves the cover 212 from the closed position to the open position. This step is optional in that the movement from the closed position to the open position could be performed automatically. If present, this step may be carried out at any time by the operator before the step of coupling he locking device 3 and the work table 2 to each other.

The operator positions the locking device 3 at the main interface 21. In particular, the operator positions the locking device 3 at the base 202. More specifically, the operator positions the locking device 3 at the main interface 21 so that the main interface 21 and the secondary interface 31 are aligned and face to face with each other.

Next, the operator coupled the locking device 3 to the work table 2, in particular to the bar 20, and more specifically to the base 202, the step of coupling comprising connecting the main interface 21 and the secondary interface 31 to each other as to be able to exchange energy and/or a signal with the locking device 3.

The steps, or operations, described here for mounting, or coupling, the locking device 3 to the work table 2, may be performed, with the necessary changes, in reverse order, in order to disassemble, or uncouple the locking device 3 from the work table 2.

This invention has been described by way of non-limiting illustration with regard to its preferred embodiments but it is understood that variants and/or modifications can be made by experts in the trade without thereby departing from the scope of protection afforded by the claims appended hereto.

## Claims

1. A machine (1) for machining a wooden part, or the like, comprising:
- a work table (2);
- a locking device (3), configured to be coupled to, and uncoupled from the work table (2) and to support and hold the part in place; and
- a machining unit (4), configured to machine the part;
wherein the work table (2) comprises a main interface (21), the main interface (21) being configured to exchange energy and/or a signal, wherein the locking device (3) comprises a secondary interface (31), configured to exchange energy and/or a signal, and wherein the main interface (21) is configured to connect to the secondary interface (31) when the locking device (3) is coupled to the work table at the main interface (21), and is configured to disconnect from the secondary interface (31) when the locking device (3) is uncoupled from the work table (2).

2. The machine (1) according to claim 1, wherein the work table (2) defines a working area, and wherein the main interface (21) is movable in the working area.

3. The machine (1) according to claim 2, wherein the work table (2) comprises an actuator coupled to the main interface (21) to move it in the working area, and wherein the machine (1) comprises a controller which is connected to the actuator to control it in order to move the main interface (21) automatically.

4. The machine (1) according to any one of the preceding claims, wherein the main interface (21) comprises a cover (212) configured to isolate the main interface (21) from an outside environment.

5. The machine (1) according to claim 4, wherein the cover (212) is movable between a closed position, where it isolates the main interface (21) from the outside environment, and an open position, where it does not isolate the main interface (21) from the outside environment.

6. The machine (1) according to claim 5, wherein the cover (212) passes from the closed position to the open position automatically during coupling of the locking device (3) to the work table (2) at the main interface (21), and passes from the open position to the closed position automatically during uncoupling of the locking device (3) from the work table (2).

7. The machine (1) according to any one of the preceding claims, wherein the work table (2) comprises a bar (20), extending along a transverse axis (Y) and movable along a longitudinal axis (X) perpendicular to the transverse axis (Y), wherein the main interface (21) is coupled to the bar (20) movably along the transverse axis (Y), and wherein the locking device (3) is configured to be coupled to, and uncoupled from, the bar (20) at the main interface (21), so as to connect the main interface (21) to the secondary interface (31) when the locking device (3) is coupled to the bar (20), and to disconnect the main interface (21) from the secondary interface (31) when the locking device (3) is uncoupled from the bar (20).

8. The machine (1) according to any one of the preceding claims, wherein the work table (2) comprises a bar (20), extending along a transverse axis (Y) and movable along a longitudinal axis (X) perpendicular to the transverse axis (Y), wherein the bar (20) comprises a base (202) movable along the transverse axis (Y) and comprising the main interface (21), and wherein the locking device (3) is configured to be coupled to, and uncoupled from, the base (202).

9. The machine (1) according to any one of the preceding claims, wherein the main interface (21) is configured to connect to the secondary interface (31), to exchange energy and/or a signal, through a mechanical and/or optical and/or electromagnetic and/or fluid-dynamic and/or contactless and/or sliding and/or plug-in connection.

10. The machine (1) according to any one of the preceding claims, wherein the locking device (3) performs operations on the part and/or changes configuration, using the energy exchanged through the connection between the main interface (21) and the secondary interface (31).

11. The machine (1) according to any one of the preceding claims, wherein the locking device (3) comprises a sensor for detecting at least one quantity relating to the machining of the part and/or the operating state of the locking device and/or the operating state of the machine (1), and wherein the quantity detected is exchanged through the connection between the main interface (21) and the secondary interface (31).

12. A method for configuring a machine (1) for machining a wooden part, or the like, comprising a work table (2) having a main interface (21) configured to exchange energy and/or a signal, a locking device (3) configured to be coupled to, and uncoupled from the work table (2) and to support and hold the part in place, and a machining unit (4) configured to machine the part, the method comprising the following steps:
- coupling the locking device (3) to the work table (2) at the main interface (21);
- during the preceding step, connecting the main interface (21) to the secondary interface (31) to exchange energy and/or a signal;
- uncoupling the locking device (3) from the work table (2); and
- during the preceding step, disconnecting the main interface (21) from the secondary interface (31).

13. The method according to the preceding claim, further comprising the following step:
- before the step of coupling the locking device (3), positioning the main interface (21) at an assembling position in a working area defined by the work table (2).

14. The method according to claim 12 or 13, further comprising the following step:
- before the step of uncoupling the locking device (3), positioning the main interface (21) at a disassembling position in the working area.

15. The method according to claim 13 or 14, wherein the assembling position and/or the disassembling position are proximal to an operator side.
